# EUROPEAN PATENT SPECIFICATION

(11) **EP 2 937 804 B1**
(45) Date of publication and mention of the grant of the patent: **15.11.2017**
(21) Application number: 15164163.6
(22) Date of filing: 20.04.2015
(51) Int. Cl.: G06F 21/33, H04L 9/32, H04L 29/06

(54) **AUTHENTICATING A NODE IN A COMMUNICATION NETWORK**
AUTHENTIFIZIERUNG EINES KNOTENS IN EINEM KOMMUNIKATIONSNETZ
AUTHENTIFICATION D'UN NOEUD DANS UN RÉSEAU DE COMMUNICATION

(30) Priority: 23.04.2014 US 201414259445
(43) Date of publication of application: 28.10.2015
(73) Proprietor: F-Secure Corporation, 00181 Helsinki (FI)
(72) Inventor: Niemelä, Jarno, 00181 Helsinki (FI); Palomäki, Pirkka, Saratoga, CA California CA 95070 (US)
(74) Representative: Lind, Robert

(56) References cited:
- US-A1- 2010 146 250
- US-A1- 2012 054 847
- US-A1- 2014 095 866
- US-B1- 7 739 494
- US-B1- 8 327 131

## Description

### Field of the Invention

The present invention relates to authenticating nodes in a communication network.

### Background to the Invention

Use of communications networks such as the Internet to access secure services such as customer bank account details is now commonplace. However, it is important for the user that this type of access cannot be compromised by a malicious third party.

Transport Layer Security (TLS) and its predecessor Secure Sockets Layer (SSL) are commonly used protocols to enable information to be sent securely over the communication network. These protocols rely on authentication of a certificate to allow each party to authenticate themselves to other parties. Certificates are provided by a Certifying Authority (CA).

Consider the situation in which a user client accesses a secure server to, for example, access a user's bank account. When the user client accesses the server, the server presents its certificate to the user client. The user client validates the server's certificate. Note that if the user client is to be sure that the certificate comes from the same server, information identifying the server (such as a URL) should be included in the certificate. Only a trusted CA can include such information in the certificate, and so checking the information identifying the server against information identifying the server included in the certificate can be used by the client to identify that the certificate belongs to the server.

It is possible for a malicious third party to approach a CA claiming to represent someone else, and obtain a certificate. For example, a malicious third party in Brazil may approach a CA based in the UK, and claim to represent a Finnish bank. The malicious third party would present his own identifying information to be embedded in the certificate. The CA may not have the resources to perform comprehensive checks on the third party and simply issue a certificate on the basis of cursory checks. For example, the third party may obtain remote access to the Finnish bank's computer network and send an email to the CA that seems to come from an employee of the Finnish bank. There are several ways in which a malicious third party can trick a CA into issuing a certificate. The certificate obtained by the third party would therefore appear to be linked to the identification of a server of the Finnish bank when it in fact is linked to an identification of a server used by the third party.

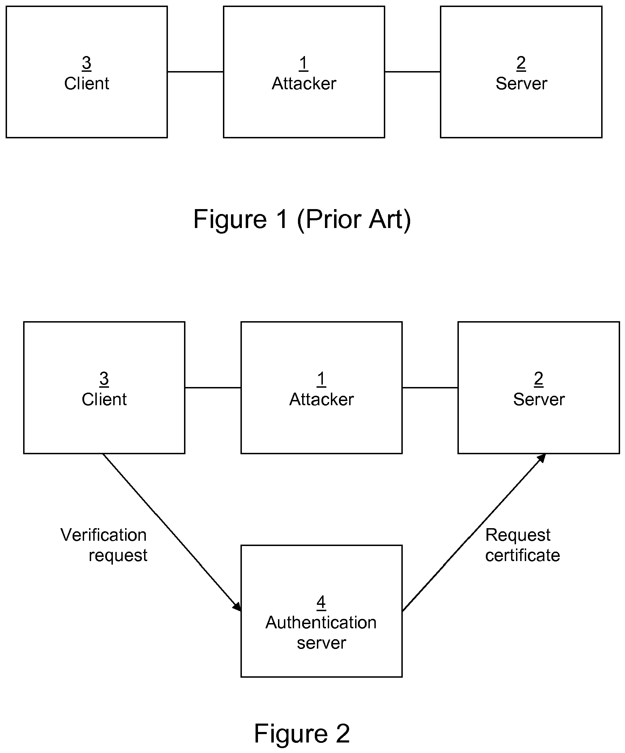

Once a malicious third party has obtained a certificate, any communications between a client and the Finnish bank server become vulnerable to a so-called "man-in-the-middle" attack. In this type of attack, the malicious third party is an attacker and connects to both the client and to the server, as illustrated in Figure 1. The attacker 1 impersonates the server 2 towards the client 3, and impersonates the client 3 towards the server 2, making the client 3 and sever 2 believe that they are communicating directly with one another. Even when the attacker 1 has obtained a certificate that incorporates identifying information the Server 2, the user's client 3 can be fooled into thinking that it is communicating with the Server 2 rather than the attacker 1.

Further problems may arise when a malicious third party is able to create server certificates that are issued by a root CA or its delegate CA. For example, the malicious third party end-point may perform a man-in-the-middle attack between an end-point and the CA.

Certificate pining is an emerging method to circumvent valid certificate based attacks. However, this is not effective if the first session is targeted with a man-in-the-middle attack. Also this does not provide more granular control to trust of certificates.

Revocation lists of revoked certificates can also be ineffective as they are usually not turned on, and would not help in the case of a valid certificate chain from a trusted root and the trusted root has not acknowledged the false certificate in its revocation list.

Using a centralized "many eyes" strategy where certificates are retrieved by several clients and compared at the backend server can be problematic, since an attacker may be able to prevent access to the central backend and thus users cannot distinguish between network or backend server error and the attacker manipulating the network traffic. There remains a need for a certificate trustworthiness evaluation system that does not rely solely on central servers.

US2014/095866 describes a mechanism for analysing the authenticity of a digital certificate. The mechanism makes use of data intrinsic to the certificate and other, extrinsic data, to obtain a measure of "suspiciousness".

### Summary of the Invention

It is an object of the invention to reduce the risk of man-in-the-middle attacks, even in situations where a client node cannot connect to a central sever.

According to a first aspect of the invention, there is provided a method of determining a reputation score for a certificate offered by a remote server in a communication network. According to the method, a client node receives the certificate from a remote server via a first network interface to which the client node is connected. The client node then compares data relating to the certificate with further data stored in a certificates database stored at the client node, that further data comprising data relating to one or more certificates offered by said remote server and received by the client node via one or more network interfaces different from said first network interface. The client node then determines a reputation score for the received certificate based on the comparison, wherein if the certificate offered by the remote server and received via the first network interface is different from a certificate offered by the remote server and received via a different network interface, a lower reputation score is applied, the reputation score being usable for determining whether to trust the certificate received via the first network interface. Advantageously, the method allows a client node to make a determination as to whether to trust a certificate, without having to contact a central server.

As an option, the method may further comprise the step of determining whether to terminate communication with the remote server based on the reputation score, or informing a user of the reputation score, such that the user can decide whether to terminate communication with the remote server.

Optionally, the received certificate is stored in the database, along with further information about the certificate.

The further information may optionally comprise any one of; a date and/or time the certificate was generated; a date and/or time the certificate was received; and an address of the remote server.

The comparison to determine the reputation score may optionally comprise any of: comparing the certificate against information contained in a Certifying Authority revocation list; comparing a reputation of the remote server against information contained in a reputation list; determining if the remote server already has an existing certificate, and comparing the existing certificate with the certificate; and comparing the certificate received from the remote server against further certificates received from the remote server at different time periods or locations.

As an option, the network may be any one of a WiFi, 3G, or LTE network.

Optionally, the method further comprises downloading information relating to certificates from a server and storing the information relating to certificates in the database. The information relating to the certificate may have been gathered/generated by other client nodes before being uploaded to the server. The information may include a reputation score assigned to the certificate by each of the other client nodes.

Optionally, the method further comprises uploading information from the client node to the server, where the information relating to the certificate. For example, the client node may upload its calculated reputation score for the certificate to the server. This information can then be used by other entities, such as other client nodes.

According to a second aspect of the invention, there is provided a client node. The client node comprises; a first receiver arranged to receive a certificate from a remote server via a first network interface; a certificates database comprising data relating to certificates, that data comprising data relating to one or more certificates offered by said remote server and received by the client node via one or more network interfaces different from said first network interface; and a first processor arranged to compare data relating to the received certificate with the data in the certificates database. The first processor is further arranged to determine a reputation score for the received certificate based on the comparison, wherein if the certificate offered by the remote server and received via the first network interface is different from a certificate offered by the remote server and received via a different network interface, a lower reputation score is applied, the reputation score being usable for determining whether to trust the certificate received via the first network interface.

As an option, the client node may further comprise a second processor arranged to determine whether to terminate the communication with the remote server based on the reputation score.

As a further option, the client node may further comprise an I/O interface, and the second processor may be further arranged to inform a user of the reputation score, such that the user can decide whether to terminate the communication with the remote server.

As a further option, the first processor may be arranged to store the received certificate in the database, along with further information about the certificate.

Optionally, the first processor is arranged to compare any of: the certificate received from the remote server with information contained in a Certifying Authority revocation list; a reputation of the remote server against a reputation list stored in the database; an existing certificate for the remote server against the received certificate from the remote server; the certificate received from the remote server against further certificates received from the remote server at different time periods or locations.

The client node may further comprise a transmitter for transmitting a request to a server for further information regarding certificates, and a second receiver for receiving the further information regarding certificates.

According to a third aspect of the invention, there is provided a computer program, comprising computer readable code which, when run on a client node, causes the client node to behave as a client node as described in the second aspect.

According to a fourth aspect of the invention, there is provided a computer program product comprising a non-transitory computer readable medium and a computer program according to the third aspect, wherein the computer program is stored on the non-transitory computer readable medium.

The invention is defined by the independent claims.

### Brief Description of the Drawings

Figure 1 illustrates schematically in a block diagram a man-in-the-middle attack between a client and a server;
Figure 2 illustrates schematically in a block diagram a network architecture and signalling;
Figure 3 is a flow diagram;
Figure 4 is a flow diagram;
Figure 5 illustrates schematically in a block diagram a client node;
Figure 6 illustrates schematically in a block diagram an authentication server;
Figure 7 is a flow diagram showing the steps of an embodiment of the invention; and
Figure 8 illustrates schematically in a block diagram a client node according to an embodiment of the invention.

### Detailed Description of Certain Embodiments

The following description discusses the invention in the environment of Secure Sockets Layer (SSL) protocols used in the Internet, but it will be appreciated that it can apply equally to other types of security protocol that rely on certificates, and to other types of communication network.

Referring to Figure 2, a third party authentication server 4 is provided that can connect to both the client 3 and the server 2. In this example, an attacker 1 uses Domain Name System (DNS) poisoning to provide false data to a Domain Name Server (not shown). The Domain Name Server caches information in order to improve its performance, and so will also cache the false information. In this case, the Domain Name Server has the server of the attacker's domain redirected to the server 2. In this way, anyone who uses the Domain Name Server to perform a DNS lookup for the server 2 will obtain the attacker's domain name rather than the server's 2 domain name.

The client 3 subsequently performs a DNS lookup in order to contact the server 2, and because the Domain Name Server has been poisoned, receives the attacker's 1 domain name. The client 3 then contacts the attacker 2 in the belief that he is contacting the server 2, and is unaware that he is really communicating with the attacker 1.

The SSL protocol is used for the client 3 to validate the server's 3 certificate. The attacker 1 sends the client 3 the attacker's certificate, and the client 3 checks the digital signatures of the attacker's certificate. Because the attacker's certificate was fraudulently obtained from a CA, the certificate is validated, and the client now believes that it can communicate securely with the server 2 when it is in fact communicating with the attacker 1.

According to the invention, out of band authentication is used to provide a further check on the certificate presented by the attacker. When the SSL connection is opened between the client 3 and the server 2, or the client 3 and the attacker, an authentication request is sent to the third party authentication server 4. The authentication request contains the server's 2 certificate.

When the authentication server 4 receives the authentication request, it contacts the server 2 to obtain the server's certificate. The server 2 replies to the authentication server 4 with its certificate. Note that the authentication server may already have knowledge of the server's certificate (for example, if it has been statically provisioned or provided to the authentication server 4 in a previous request). The authentication server 4 then compares the server certificate received from the client 3 in the authentication request with the server certificate received from the server 2. If there is no man-in-the-middle attack, and the client 3 is communicating directly with the server 2, then the certificates are identical and the authentication server 4 can report to the client 3 that the server 2 is authenticated and can be trusted. If, on the other hand, the certificates do not match, the authentication server 4 reports to the client 1 that the client 1 has been presented with a fraudulent certificate and the connection with the attacker 1 should be closed.

The authentication server 4 may also retrieve lists of revoked certificates from one or more CAs. The server certificate can be compared with entries in the revoked certificates list. If a match is found, then the authentication server 4 is aware that the server's certificate is revoked, and reports to the client 1 that the client has been presented with a revoked certificate.

The authentication server 4 can perform additional tasks, such as data mining, to look for patterns where certificates are presented by the same attacker 1. This data can be used for detecting any unusual activity that may be further researched by the operators of the authentication server 4 to predict new forms of misuse be they become common knowledge. Furthermore, the authentication server 4 can apply rules to determine circumstances in which it is more likely that a client 3 is subject to a man in the middle attack. For example, a company may have a server based in the UK, and has previously presented certificates identifying the UK server. If a certificate purporting to be from the company is presented by the client, and the certificate identifies a server in China, it is more likely that the client is subject to a man in the middle attack.

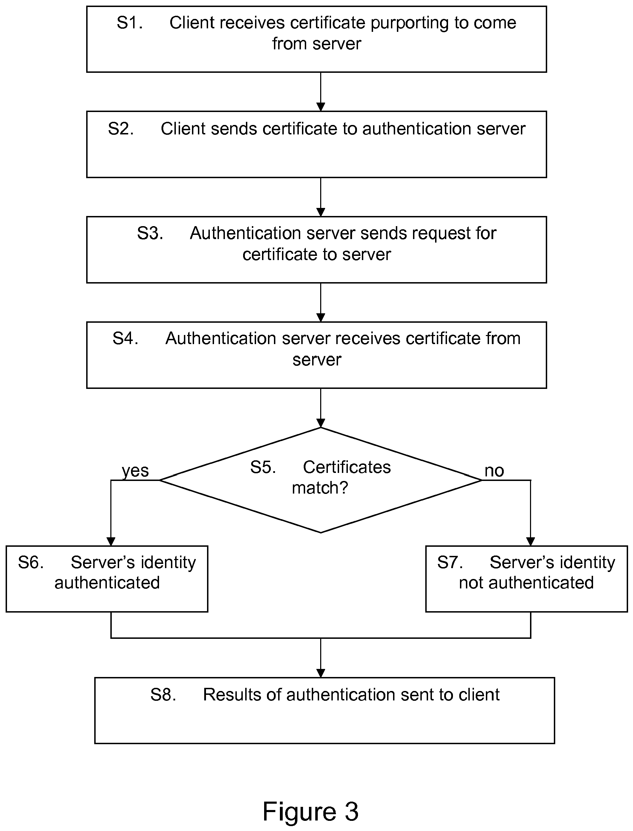

Figure 3 is a flow diagram illustrating steps of the invention. The following numbering corresponds to the numbering of Figure 3:
S1. The client 3 receives a certificate purporting to come from the server 2. As the certificate has been fraudulently obtained from a CA, initial SSL checks determine that the certificate can be trusted.
S2. The client 3 sends the certificate to the authentication server 4.
S3. The authentication server 4 sends a message to the server 2 requesting a copy of the server's certificate.
S4. The server 2 responds with a copy of its certificate.
S5. A comparison is made of the certificate received from the client 3 with the certificate received from the server 3.
S6. If the certificates match, then the certificate presented to the client 3 is valid and the server's 2 identity can be authenticated.
S7. If the certificates do not match, then the certificate presented to the client 3 is not valid and the server's 2 identity is not authenticated.
S8. The results of the authentication are sent back to the client 4.

In a further embodiment of the invention, it is possible that the authentication server 4 is targeted by a malicious third party using DNS cache poisoning or another attack. In this case, the authentication server 4 would also receive the fraudulent certificate. In order to address this, the authentication server 4 may maintain a query record 18 stored in the memory 16. The query record includes records of queries from all client nodes, including the certificates received from the server 2 (and other servers). In the event of a DNS poisoning attack, the certificate sent to the authentication server 4 from the client 3 will also match the certificate obtained from the server 2, even where the certificate is fraudulent. In order to reduce this risk, the authentication server 4 may perform a further check by comparing the certificate received from the client 3 with a certificate for the server 2 stored in the query record 18 from a previous query relating to that server. If the comparison indicates that the two certificates are different, then the authentication server 4 can perform a check to ascertain whether a DNS poisoning attack has occurred or whether the server 2 has started using a new certificate.

The check may be in the form of alerting a user to determine whether a DNS poisoning attack has occurred or whether the server 2 has started using a new certificate. Alternatively, the authentication server 4 takes no action and waits until a predetermined number of queries relating to the server 2 but from different clients has been received. If all of the subsequent queries use the same certificate as that presented by the server 4 to the client 3, it can be assumed that the server 2 is simply using the new certificate and the query record 18 and be updated.

The query record may be used to perform a statistical analysis, such that a check to ascertain whether a DNS poisoning attack has occurred or whether the server 2 has started using a new certificate occurs when a certain proportion of queries from clients use a different certificate to that stored in the query record.

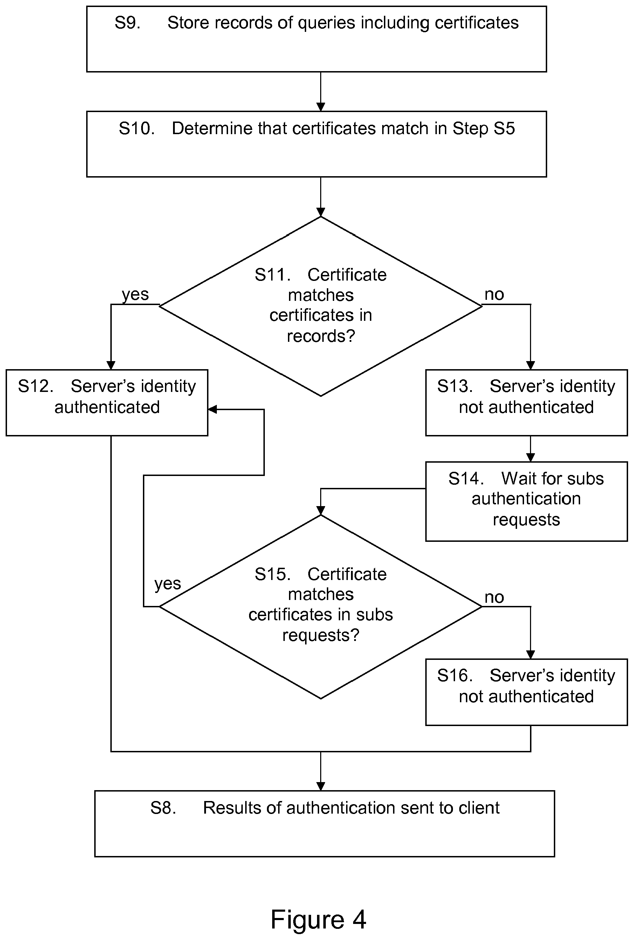

Figure 4 is a flow diagram illustrating a further embodiment of the invention. The following numbering corresponds to that of Figure 4:
S9. The authentication server 4 stores query records from a plurality of clients, the query including certificates purporting to come from the server 2.

S10. A determination is made that the certificate sent in the authentication request from the client 3 matches that received from the server 2, as described in step S5 above.

S11. A comparison is made between the certificate sent by the client 3 (this could equally be the certificate provided by the server 2) with certificates stored in the query records.

S12. If the certificate matches the certificates stored in the query records, or a predetermined proportion of the certificates stored in the query records, then the server's identity is authenticated, and the results of authentication are sent to the client as in step S8.

S13. If the certificate does not matches the certificates stored in the query records, or a predetermined proportion of the certificates stored in the query records, then the server's identity is not authenticated. The results of the authentication may be sent to the client as in step S8, or alternatively proceed to step S14

S14. The authentication server waits for a predetermined number of subsequent authentication requests from other clients.

S15. After receiving a predetermined number of subsequent authentication requests from other clients, a determination is made to see whether the certificate sent by the client 3 (or the one provided by the server 2) matches a sufficient proportion of certificates in the subsequent requests. If so, then the server's identity is authenticated and the method proceeds to step S12. If not, then the method proceeds to step S16.

S16. The server's identity is not authenticated.

S8. The results of the authentication are sent from the authentication server 4 to the client 2.

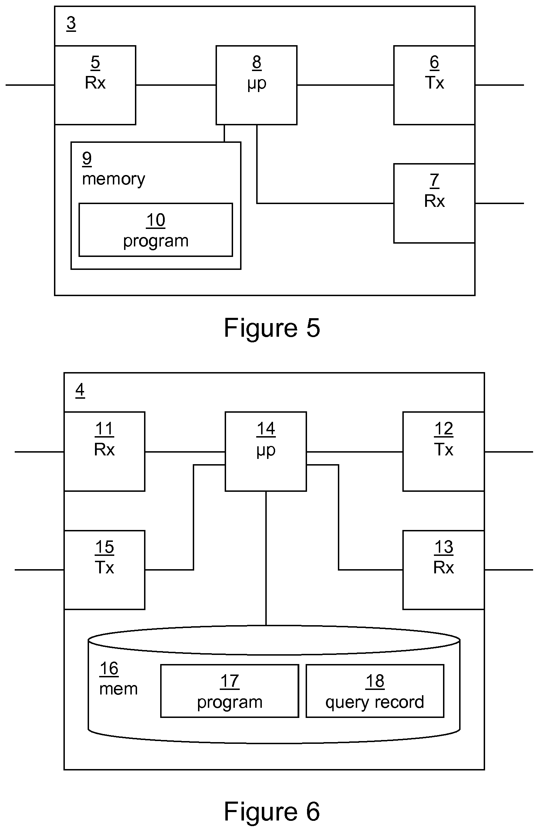

Turning now to Figure 5, a client node 3 is illustrated. The client node 3 is provided with a first receiver 5 for receiving a certificate from a node purporting to be the server 2. A first transmitter 6 is provided for sending an authentication request to the authentication server 4. A second receiver 7 is provided for receiving the results of the authentication check from the authentication server 4. A processor 8 controls the signalling and is arranged to terminate communication with the node purporting to be the server 2 in the event that the authentication result indicates that the certificate is not associated with the server 2. A memory 9 is also provided in the form of a computer readable medium, on which a program 10 may be stored. The program 10, when executed by the processor 8, causes the client node 3 to behave as described above.

An authentication server 4 is shown in Figure 6. The authentication server 4 is provided with a first receiver 11 for receiving an authentication request from the client 3. The authentication request includes a first certificate purporting to be from the server 2. A first transmitter 12 is arranged to sending a request message to the server 2. A second receiver 13 is provided for receiving a response from the server 2, the response including the server's 2 certificate. A processor 14 is provided for comparing the received certificates. If the certificates match, the certificate presented to the client 3 can be authenticated, and if the certificates do not match, the certificate presented to the client 3 cannot be authenticated. A second transmitter 15 is provided for sending the result of the comparison to the client 3. The authentication node 4 may also have a memory 16 for storing information associated with the certificates. The memory 16 is in the form of a computer readable medium on which a program 17 may be stored. The program 17, when executed by the processor 14, causes the authentication server 4 to behave as described above.

Problems can arise when a malicious third party is able to create server certificates that are issued by a root CA or its delegate CA. For example, the malicious third party may perform a man-in-the-middle attack between many end-points and the CA, or a central server containing information regarding certificates.

In order to address this, a local certificate reputation system (LCRS) can be implemented on a client node, which is not dependent on the availability of a central server, such as the CA or the authentication server 6. The LCRS stores data relating to certificates in a database, such as what type of certificates belong to which servers and which CA's issued them, how these certificates change over time or location, and over what type of network the certificates were obtained (WiFi, 3G, 4G, LTE and other mobile broadband networks, for example). In this way, data is built up over time based on the certificates received at the client node.

The LCRS can synchronise occasionally with a central server if one is available. When synchronised, the LCRS can download certificate revocation lists, or can download additional information regarding certificates that have been gathered from other client nodes. Furthermore, when synchronised, the LCRS can also upload data relating to certificates stored at the client node to the central server. The LCRS can also download, or create a reputation list, which details the reputation of CAs and central servers. The reputation list can be consulted to determine how trusted a CA or central server is.

When the client node receives a certificate from a node, such as a server, the LCRS generates a reputation score for the certificate based on the information stored in the database. The reputation score may be defined numerically, such as a value selected from 0 to 10, with 0 being untrustwory, and 10 being very trustworthy, for example. As an example, the following methods may be used by the LCRS to determine a reputation score:
- If the certificate is on a CA revocation list, it is likely that the certificate is untrustworthy, and the LCRS can assign a low reputation score to the certificate.
- If the certificate is issued by a questionable root CA (e.g. a root CA has issued false certificates in the past, or its security has possibly been compromised, parameters that can be derived from history information or configured by the system administrator can be used to determine that the risk value is higher, and the reputation score is lowered. The reputation of a CA or central server may be stored at the client node in a reputation list. If a server's certificate was given a low reputation score in the past, this may have an effect on determining the reputation score of a new certificate issued by the same server.
- If the certificate relates to a server that currently already has an existing certificate, the risk value is increased. The risk value may be further increased if the existing certificate will remain valid for a long period of time, as it is suspicious that a new certificate has been issued when an existing certificate has a long remaining life. This is especially suspicious if the old certificate is not in a revocation list.
- If the certificate received from the remote node is from a first CA, and previous certificates received from the remote node were from a second CA, then the certificate is possibly less trustworthy and the LCRS can assign a low reputation score.
- If the certificate from a given server varies depending on what network is used to connect to it, this may be seen as suspicious. An attacker is unlikely to be able to control every possible network. For example, an attacker may have control over a local ISP and thus have control over a network connection using WiFi, but the attacker may not have control over a mobile broadband network connection, such as a 3G network connection, at the same time. Therefore the LCRS can check which certificate is issued over several different network connections, and determine if the server is offering a different certificate depending on which network interface is being used. This can also be checked passively, simply by keeping a record of all certificates seen by the local certificate reputation server when a client naturally moves from one network to another. If it is determined that a new certificate is issued from a server using one network, but an older or different certificate is issued using another network, it is likely that the certificate is untrustworthy, and a lower reputation score may be applied.
- If the certificate relating to a server differs from previous certificates presented from the server to the client, or other clients, during a defined period and/or at a defined location, the risk is higher and the reputation score is lowered.

Once the LCRS has generated the reputation score, the client node, or the user using the client node, may use the reputation score, and any other information, to make a determination as to whether or not to trust the certificate.

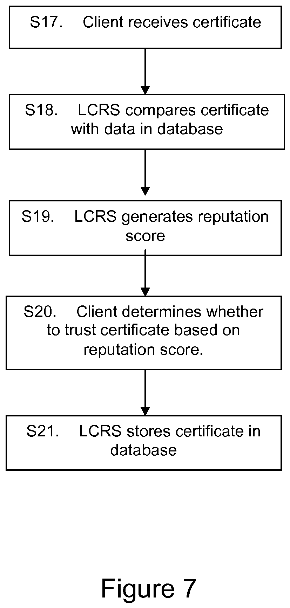

Figure 7 is a flow diagram illustrating steps of the invention. The following numbering corresponds to the numbering of Figure 7:
S17. A client node receives a certificate from a node, such as a server.
S18. An LCRS, implemented at the client node, compares information relating to the certificate with data in a database.
S19. The LCRS generates a reputation score for the certificate, based on data available in the database.
S20. The client node, or user using the client node, uses the reputation score to make a determination as to whether or not to trust the certificate. In the event that the client node or user does not trust the certificate, communication with the node may be terminated. This may be done automatically.
S21. The LCRS stores the certificate in the database, along with any other information relating to the certificate, such as the time it was received/generated, address of the node, network details regarding the connection to the node, etc. The LCRS may also store the generated reputation score relating to the certificate, along with any subsequent action that the client node or user performed such as noting that the client node or user decided not to trust the certificate.

The LCRS is able to estimate a certificate's reputation based on information provided solely by the client node. However, this estimation can be improved by synchronising with a CA or central server and updating information in the database relating to certificates. Information downloaded from the central server may be based on results sent to the central server by further client nodes. The LCRS can also upload information to the central server. This information may relate to certificates received by the client node, including the certificates themselves. Alternatively, the LCRS may synchronise with another node, such as another client node, such that the nodes may exchange certificate information and reputation scores.

Advantageously, by building up a database of empirical data relating to the certificates, a client node will be able to make an informed decision as to whether to trust a certificate without having to connect to a central server.

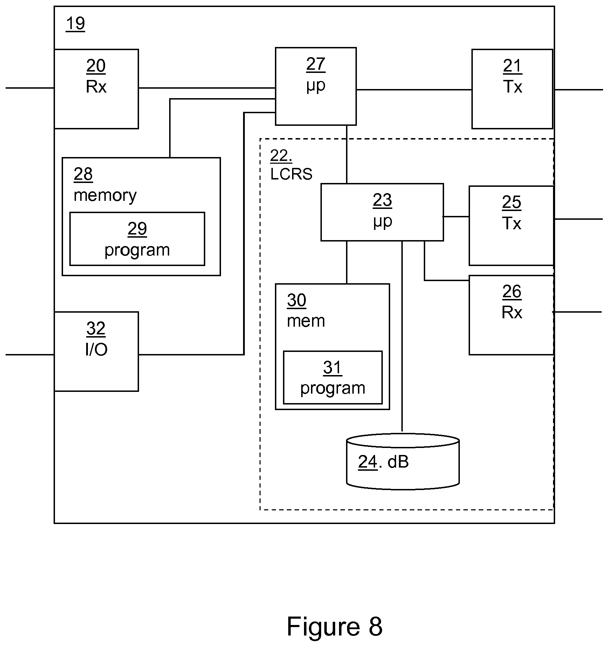

Turning now to Figure 8, a client node 19 is illustrated. The client node 19 is provided with a first receiver 20 for receiving a certificate from a node and a first transmitter 21 for communicating with the node. An LCRS 22 is provided for generating a reputation score for the certificate. The LCRS 22 comprises a first processor 23 which compares the received certificate with data in a database 24 relating to certificates. The LCRS 22 can use a second transmitter 25 to send a request for information relating to certificates to a central server, such as a CA, if one is available. This information is received via a second receiver 26, and stored in the database 24. When the first processor 23 has generated a reputation score for the certificate, the first processor 23 communicates this to a second processor 27. The second processor 27 can then make a decision as to whether it trusts the certificate, and terminate communication with the node accordingly. Alternatively, the second processor 27 can prompt the user to make the decision via an I/O interface 32. Note that the function performed by the first and second processors may be performed by the same physical processor.

A first memory 28 is also provided in the form of a computer readable medium, on which a program 29 may be stored. The program 29, when executed by the second processor 27, causes the client node 19 to behave as described above. A second memory 30 is also provided in the form of a non-transitory computer readable medium, on which a second program 31 may be stored. The second program 31, when executed by the first processor 23, causes the LCRS to behave as described above.

By building up data relating to certificates, a historical record is kept locally of what servers are using what certificates. Advantageously, the LCRS does not rely on access to a central server, and so even if a path to a central server is compromised, the client node will be able to determine whether to trust a given certificate.

The same system can be used for other types of certificates, such as e-mail and software signing certificates. While the LCRS has been described as being implemented at the client node 19, it may also be implemented in a router, serving a group of client nodes (for example, a home router serving two home PCs/laptops/tablets).

It will be appreciated by the person of skill in the art that various modifications may be made to the above described embodiment without departing from the scope of the present invention. For example, whilst the above description refers to a client node attempting to authenticate a server's certificate, it will be appreciated that the method can be applied to any types of node in a communications network.

## Claims

1. A method of determining a reputation score for a certificate offered by a remote server in a communication network, the method comprising, at a client node;
Receiving (S17) from the remote server, via a first network interface to which the client node is connected, the certificate;
Comparing (S18) data relating to the certificate with further data stored in a certificates database stored at the client node, that further data comprising data relating to one or more certificates offered by said remote server and received by the client node via one or more network interfaces different from said first network interface; and
Determining (S19) a reputation score for the certificate based on the comparison, wherein if the certificate offered by the remote server and received via the first network interface is different from a certificate offered by the remote server and received via a different network interface, a lower reputation score is applied, the reputation score being usable for determining whether to trust the certificate received via the first network interface.

2. The method of claim 1, further comprising the step of determining (S20) whether to terminate communication with the remote server based on the reputation score.

3. The method of claim 1 or 2, further comprising the step of informing a user of the reputation score, such that the user can decide whether to terminate communication with the remote server.

4. The method of any one of the preceding claims, further comprising storing the received certificate in the database, along with further information about the certificate.

5. The method of claim 4, wherein the further data additionally comprises any one of:
a date and/or time the certificate was generated;
a date and/or time the certificate was received;
an address of the remote server.

6. The method of any one of the preceding claims, wherein the comparison to determine the reputation score additionally comprises any of:
comparing the certificate against information contained in a Certifying Authority revocation list;
comparing a reputation of the remote server against information contained in a reputation list;
determining if the remote server already has an existing certificate, and comparing the existing certificate with the certificate;
comparing the certificate received from the remote server against further certificates received from the remote server at different time periods or locations.

7. The method of any one of the preceding claims, wherein a network interface may be any one of a WiFi, 3G, or LTE network.

8. The method of any one of the preceding claims, the method comprising:
downloading information relating to certificates from a server; and
storing the information relating to certificates in the database.

9. The method of claim 8, further comprising uploading information relating to the certificate to the server.

10. A client node, the client node comprising:
a first receiver (20) arranged to receive a certificate from a remote server via a first network interface;
a certificates database (24) comprising data relating to certificates, that data comprising data relating to one or more certificates offered by said remote server and received by the client node via one or more network interfaces different from said first network interface;
a first processor (23) arranged to compare data relating to the received certificate with the data in the certificates database;
the first processor (23) further arranged to determining a reputation score for the certificate based on the comparison, wherein if the certificate offered by the remote server and received via the first network interface is different from a certificate offered by the remote server and received via a different network interface, a lower reputation score is applied, the reputation score being usable for determining whether to trust the certificate received via the first network interface.

11. The client node of claim 10, the client node further comprising a second processor (27) arranged to determine whether to terminate the communication with the remote server based on the reputation score.

12. The client node of claim 10 or 11, the client node further comprising an I/O interface (32), and wherein the second processor (27) is arranged to inform a user of the reputation score, such that the user can decide whether to terminate the communication with the remote server.

13. The client node of any one of claims 10 to 12, wherein the first processor (23) is arranged to store the certificate in the database, along with further information about the certificate.

14. The client node of any one of claims 10 to 13, wherein the first processor (23) is additionally arranged to compare any of:
the certificate received from the remote server with information contained in a Certifying Authority revocation list;
a reputation of the remote server against a reputation list stored in the database;
an existing certificate for the remote server against the received certificate from the remote server;
the certificate received from the remote server against further certificates received from the remote server at different time periods or locations.

15. The client node of any one of claims 10 to 14, further comprising:
a transmitter for transmitting a request to a server for further information regarding certificates; and
a second receiver for receiving the further information regarding certificates.

16. A computer program, comprising computer readable code which, when run on a client node, causes the client node to behave as a client node as claimed in any one of claims 10 to 15.

17. A computer program product comprising a non-transitory computer readable medium and a computer program according to claim 16, wherein the computer program is stored on the non-transitory computer readable medium.

## Patentansprüche

1. Verfahren zum Bestimmen eines Reputations-Wertes für ein von einem entfernten Server in einem Kommunikationsnetz angebotenes Zertifikat, wobei das Verfahren, in einem Client-Knoten, umfasst:
Empfangen (S 17) des Zertifikats über eine erste Netzschnittstelle, mit welcher der Client-Knoten verbunden ist, vom entfernten Server;
Vergleichen (S18) von Daten bezüglich des Zertifikats mit weiteren Daten, welche in einer Zertifikat-Datenbank gespeichert sind, die im Client-Knoten gespeichert ist, wobei diese weiteren Daten Daten bezüglich eines oder mehrerer Zertifikate umfassen, welche vom entfernten Server angeboten werden und vom Client-Knoten über eine oder mehrere Netzschnittstellen empfangen werden, welche sich von der ersten Netzschnittstelle unterscheiden; und
Bestimmen (S19) eines Reputations-Wertes für das Zertifikat auf der Basis des Vergleichs, wobei, falls das vom entfernten Server angebotene und über die erste Netzschnittstelle empfangene Zertifikat sich von einem Zertifikat unterscheidet, welches vom entfernten Server angeboten und über eine andere Netzschnittstelle empfangen wird, ein niedrigerer Reputations-Wert angewendet wird, wobei der Reputations-Wert verwendbar ist, um zu bestimmen, ob man dem über die erste Netzschnittstelle empfangenen Zertifikat vertrauen kann.

2. Verfahren nach Anspruch 1, ferner umfassend den Schritt des Bestimmens (S20), ob die Kommunikation mit dem entfernten Sever auf der Basis des Reputations-Werts beendet werden soll.

3. Verfahren nach Anspruch 1 oder 2, ferner umfassend den Schritt des Informierens eines Benutzers über den Reputations-Wert, sodass der Benutzer entscheiden kann, ob die Kommunikation mit dem entfernten Server beendet werden soll.

4. Verfahren nach einem der vorhergehenden Ansprüche, ferner umfassend das Speichern des empfangenen Zertifikats in der Datenbank, zusammen mit weiteren Informationen über das Zertifikat.

5. Verfahren nach Anspruch 4, wobei die weiteren Daten zusätzlich eines der Folgenden umfassen:
ein Datum und/oder eine Zeit der Erzeugung des Zertifikats;
ein Datum und/oder eine Zeit des Empfangens des Zertifikats;
eine Adresse des entfernten Servers.

6. Verfahren nach einem der vorhergehenden Ansprüche, wobei der Vergleich zum Bestimmen des Reputations-Werts zusätzlich eines der Folgenden umfasst:
Vergleichen des Zertifikats mit Informationen, welche in einer Widerrufliste einer Zertifizierungsinstanz enthalten sind;
Vergleichen einer Reputation des entfernten Servers mit Informationen, welche in einer Reputationsliste enthalten sind;
Bestimmen, ob der entfernte Server schon ein existierendes Zertifikat aufweist, und Vergleichen des existierenden Zertifikats mit dem Zertifikat;
Vergleichen des vom entfernten Server empfangenen Zertifikats mit weiteren Zertifikaten, welche vom entfernten Server während unterschiedlicher Zeitperioden oder an unterschiedlichen Orten empfangen werden.

7. Verfahren nach einem der vorhergehenden Ansprüche, wobei eine Netzschnittstelle eine von einem WLAN-, 3G- oder LTE-Netz sein kann.

8. Verfahren nach einem der vorhergehenden Ansprüche, wobei das Verfahren umfasst:
Herunterladen von Informationen bezüglich Zertifikaten von einem Server; und
Speichern der Informationen bezüglich Zertifikaten in der Datenbank.

9. Verfahren nach Anspruch 8, ferner umfassend das Hochladen von Informationen bezüglich des Zertifikats auf den Server.

10. Client-Knoten, wobei der Client-Knoten umfasst:
einen ersten Empfänger (20), welcher zum Empfangen eines Zertifikats von einem entfernten Server über eine erste Netzschnittstelle ausgebildet ist;
eine Zertifikatdatenbank (24), umfassend Daten bezüglich Zertifikaten, wobei diese Daten Daten umfassen, welche sich auf ein oder mehrere Zertifikate beziehen, welche vom entfernten Server angeboten werden und welche vom Client-Knoten über eine oder mehrere Netzschnittstellen empfangen werden, welche sich von der ersten Netzschnittstelle unterscheiden;
einen ersten Prozessor (23), welcher ausgebildet ist, um die Daten bezüglich des empfangenen Zertifikats mit den Daten in der Zertifikatdatenbank zu vergleichen;
wobei der erste Prozessor (23) ferner ausgebildet ist, um einen Reputations-Wert für das Zertifikat auf der Basis des Vergleichs zu bestimmen, wobei, falls das vom entfernten Server angebotene und über die erste Netzschnittstelle empfangene Zertifikat sich von einem vom entfernten Server angebotenen und über eine unterschiedliche Netzschnittstelle empfangenen Zertifikat unterscheidet, ein niedrigerer Reputations-Wert angewendet wird, wobei der Reputations-Wert verwendet werden kann, um zu bestimmen, ob man dem über die erste Netzschnittstelle empfangenen Zertifikat vertrauen kann.

11. Client-Knoten nach Anspruch 10, wobei der Client-Knoten ferner einen zweiten Prozessor (27) umfasst, welcher ausgebildet ist, um zu bestimmen, ob die Kommunikation mit dem entfernten Server, auf der Basis des Reputations-Werts, beendet werden soll.

12. Client-Knoten nach Anspruch 10 oder 11, wobei der Client-Knoten ferner eine I/O-Schnittstelle (32) umfasst, und wobei der zweite Prozessor (27) ausgebildet ist, um einen Benutzer über den Reputations-Wert zu informieren, sodass der Benutzer entscheiden kann, ob die Kommunikation mit dem entfernten Server beendet werden soll.

13. Client-Knoten nach einem der Ansprüche 10 bis 12, wobei der erste Prozessor (23) ausgebildet ist, um das Zertifikat zusammen mit weiteren Informationen bezüglich des Zertifikats in der Datenbank zu speichern.

14. Client-Knoten nach einem der Ansprüche 10 bis 13, wobei der erste Prozessor (23) zusätzlich ausgebildet ist, um irgendeines der Folgenden zu vergleichen:
das vom entfernten Server empfangene Zertifikat mit Informationen, welche in einer Widerrufliste einer Zertifizierungsinstanz enthalten sind;
eine Reputation des entfernten Servers mit einer in der Datenbank gespeicherten Reputationsliste;
ein vorhandenes Zertifikat für den entfernten Server mit dem vom entfernten Server empfangenen Zertifikat;
das vom entfernten Server empfangene Zertifikat mit weiteren Zertifikaten, welche vom entfernten Server während unterschiedlicher Zeitperioden und an unterschiedlichen Orten empfangen wurden.

15. Client-Knoten nach einem der Ansprüche 10 bis 14, ferner umfassend:
einen Sender zum Senden einer Anforderung zu einem Server nach weiteren Informationen bezüglich Zertifikaten; und
einen zweiten Empfänger zum Empfangen der weiteren Informationen bezüglich Zertifikaten.

16. Computerprogramm, umfassend einen computerlesbaren Code, welcher, wenn auf einem Client-Knoten ausgeführt, den Client-Knoten dazu veranlasst, sich als Client-Knoten nach einem der Ansprüche 10 bis 15 zu verhalten.

17. Computerprogrammprodukt, umfassend ein nichtflüchtiges computerlesbares Medium und ein Computerprogramm nach Anspruch 16, wobei das Computerprogramm auf dem nichtflüchtigen computerlesbaren Medium gespeichert ist.

## Revendications

1. Procédé de détermination d'un score de réputation pour un certificat qui est offert par un serveur à distance dans un réseau de communication, le procédé comprenant, au niveau d'un noeud de client :
la réception (S 17), depuis le serveur à distance, via une première interface de réseau à laquelle le noeud de client est connecté, du certificat ;
la comparaison (S18) de données se rapportant au certificat avec d'autres données qui sont stockées dans une base de données de certificats qui est stockée au niveau du noeud de client, ces autres données comprenant des données se rapportant à un ou plusieurs certificats qui sont offerts par ledit serveur à distance et qui sont reçus par le noeud de client via une ou plusieurs interfaces de réseau qui sont différentes de ladite première interface de réseau ; et
la détermination (S19) d'un score de réputation pour le certificat sur la base de la comparaison, dans lequel, si le certificat qui est offert par le serveur à distance et qui est reçu via la première interface de réseau est différent d'un certificat qui est offert par le serveur à distance et qui est reçu via une interface de réseau différente, un score de réputation plus faible est appliqué, le score de réputation pouvant être utilisé pour déterminer si oui ou non il convient d'avoir confiance dans le certificat qui est reçu via la première interface de réseau.

2. Procédé selon la revendication 1, comprenant en outre l'étape consistant à déterminer (S20) si oui ou non il convient de terminer une communication avec le serveur à distance sur la base du score de réputation.

3. Procédé selon la revendication 1 ou 2, comprenant en outre l'étape consistant à informer un utilisateur du score de réputation, de telle sorte que l'utilisateur puisse décider si oui ou non il convient de terminer une communication avec le serveur à distance.

4. Procédé selon l'une quelconque des revendications précédentes, comprenant en outre le stockage du certificat reçu dans la base de données, en association avec d'autres informations concernant le certificat.

5. Procédé selon la revendication 4, dans lequel les autres données comprennent de façon additionnelle l'une quelconque parmi :
une date et/ou une heure à laquelle/auxquelles le certificat a été généré ;
une date et/ou une heure à laquelle/auxquelles le certificat a été reçu ;
une adresse du serveur à distance.

6. Procédé selon l'une quelconque des revendications précédentes, dans lequel la comparaison de manière à déterminer le score de réputation comprend de façon additionnelle l'une quelconque parmi :
la comparaison du certificat avec une information qui est contenue dans une liste de révocations d'autorité de certification ;
la comparaison d'une réputation du serveur à distance avec une information qui est contenue dans une liste de réputations ;
la détermination si le serveur à distance dispose déjà d'un certificat existant, et la comparaison du certificat existant avec le certificat ;
la comparaison du certificat qui est reçu depuis le serveur à distance avec d'autres certificats qui sont reçus depuis le serveur à distance à des périodes temporelles différentes ou au niveau d'endroits différents.

7. Procédé selon l'une quelconque des revendications précédentes, dans lequel une interface de réseau peut être n'importe quel réseau pris parmi un réseau Wifi, 3G ou LTE.

8. Procédé selon l'une quelconque des revendications précédentes, le procédé comprenant :
le téléchargement d'une information se rapportant à des certificats depuis un serveur ; et
le stockage de l'information se rapportant à des certificats dans la base de données.

9. Procédé selon la revendication 8, comprenant en outre le téléversement d'une information se rapportant au certificat sur le serveur.

10. Noeud de client, le noeud de client comprenant :
un premier récepteur (20) qui est agencé de manière à recevoir un certificat qui provient d'un serveur à distance via une première interface de réseau ;
une base de données de certificats (24) qui comprend des données se rapportant à des certificats, ces données comprenant des données se rapportant à un ou plusieurs certificats qui sont offerts par ledit serveur à distance et qui sont reçus par le noeud de client via une ou plusieurs interfaces de réseau qui sont différentes de ladite première interface de réseau ;
un premier processeur (23) qui est agencé de manière à comparer des données se rapportant au certificat reçu avec les données dans la base de données de certificats,
le premier processeur (23) étant en outre agencé de manière à déterminer un score de réputation pour le certificat sur la base de la comparaison, dans lequel, si le certificat qui est offert par le serveur à distance et qui est reçu via la première interface de réseau est différent d'un certificat qui est offert par le serveur à distance et qui est reçu via une interface de réseau différente, un score de réputation plus faible est appliqué, le score de réputation pouvant être utilisé pour déterminer si oui ou non il convient d'avoir confiance dans le certificat qui est reçu via la première interface de réseau.

11. Noeud de client selon la revendication 10, le noeud de client comprenant en outre un second processeur (27) qui est agencé de manière à déterminer si oui ou non il convient de terminer la communication avec le serveur à distance sur la base du score de réputation.

12. Noeud de client selon la revendication 10 ou 11, le noeud de client comprenant en outre une interface d'entrée/de sortie I/O (32), et dans lequel le second processeur (27) est agencé de manière à informer un utilisateur du score de réputation, de telle sorte que l'utilisateur puisse décider si oui ou non il convient de terminer la communication avec le serveur à distance.

13. Noeud de client selon l'une quelconque des revendications 10 à 12, dans lequel le premier processeur (23) est agencé de manière à stocker le certificat dans la base de données, en association avec d'autres informations concernant le certificat.

14. Noeud de client selon l'une quelconque des revendications 10 à 13, dans lequel le premier processeur (23) est agencé de façon additionnelle de manière à effectuer n'importe laquelle des comparaisons qui suivent :
le certificat qui est reçu depuis le serveur à distance avec une information qui est contenue dans une liste de révocations d'autorité de certification ;
une réputation du serveur à distance avec une liste de réputations qui est stockée dans la base de données ;
un certificat existant pour le serveur à distance avec le certificat qui est reçu depuis le serveur à distance ;
le certificat qui est reçu depuis le serveur à distance avec d'autres certificats qui sont reçus depuis le serveur à distance à des périodes temporelles différentes ou au niveau d'endroits différents.

15. Noeud de client selon l'une quelconque des revendications 10 à 14, comprenant en outre :
un émetteur pour émettre une requête vers un serveur quant à d'autres informations concernant des certificats ; et
un second récepteur pour recevoir les autres informations concernant des certificats.

16. Programme informatique, comprenant un code lisible par ordinateur qui, lorsqu'il est exécuté sur un noeud de client, amène le noeud de client à se comporter en tant que noeud de client tel que revendiqué selon l'une quelconque des revendications 10 à 15.

17. Produit de programme informatique comprenant un support lisible par ordinateur non transitoire et un programme informatique selon la revendication 16, dans lequel le programme informatique est stocké sur le support lisible par ordinateur non transitoire.
